Europäisches Patentamt

European Patent Office

Office européen des brevets

(19)

(11) Publication number: **0 091 452**
**B1**

(12) # EUROPEAN PATENT SPECIFICATION

(45) Date of publication of patent specification: **26.11.86**

(51) Int. Cl.⁴: **A 01 K 89/02**

(21) Application number: **82903055.0**

(22) Date of filing: **19.10.82**

(86) International application number:
**PCT/HU82/00054**

(87) International publication number:
**WO 83/01366 28.04.83 Gazette 83/10**

(54) FISHING REEL.

(30) Priority: **19.10.81 HU 303181**

(43) Date of publication of application:
**19.10.83 Bulletin 83/42**

(45) Publication of the grant of the patent:-
**26.11.86 Bulletin 86/48**

(84) Designated Contracting States:
**DE FR GB SE**

(56) References cited:
**GB-A- 5 531**
**GB-A- 809 014**
**SU-A- 36 090**
**SU-A- 248 371**
**US-A-1 566 594**
**US-A-2 055 358**
**US-A-2 194 088**
**US-A-3 944 160**

(73) Proprietor: **MAGYAR OPTIKAI MÜVEK**
**Csörsz utca 35**
**H-1525 Budapest XII (HU)**

(72) Inventor: **VADASZ, József**
**Berda ut 54**
**H-1054 Budapest IV (HU)**
Inventor: **SZECSENYI, György**
**Ulászló ut 22**
**H-1114 Budapest XI (HU)**
Inventor: **DRESCHER, József**
**Szemtendrei ut 18**
**H-1035 Budapest III (HU)**

(74) Representative: **Gold, Tibor Zoltán et al**
**T.Z.GOLD & COMPANY 9, Staple Inn**
**London WC1V 7QH (GB)**

# Description

The present invention relates to a fishing reel having a mechanism that prevents the rotary motion of the moving parts of the reel in one direction when they acquire a critical combination of angular velocity and acceleration. This mechanism may be such that it prevents any movement at all in the said direction (hereinafter called 'the reverse direction').

Fishing reels are known in which winding up of the fishing line takes place by rotating a drive arm in a counter-clockwise direction (if the drive arm is arranged on the left side), while winding out of the line is performed by winding the drive arm in a clockwise direction. A mechanism, e.g. a ratchet, for preventing motion in the reverse direction, i.e. the direction in which line is wound out, can be found in every fishing reel, the mechanism gives either a rasping noise or no sound at all.

Fishing reels are also known in which prevention of reverse motion is controlled by a three-way selector switch; by means of said switch three modes of operation can be selected:

Position 1: Winding in is possible and is performed noiselessly; reverse motion is possible;

Position 2: Winding in is possible, it takes place noiselessly; reverse motion is prevented;

Position 3: Winding in is possible, a rasping sound is produced and reverse rotation is prevented.

Brakes for fishing reels are known, e.g. from British Patent Specification No. 5531/1914 and U.S. Patent Specification No. 2,055,358, that have brake bodies that are moved centrifugally and, when the spool is rotated sufficiently fast, are pressed against brake drums to slow the reel down. However, such brakes do not prevent movement of the spool in the reverse direction in the same way as the ratchet mechanism, they merely slow down such motion.

The mechanism for inhibiting reverse motion has to perform a most important function when the fish is taking the bait and the fisherman has to jerk the rod back to ensure that the hook is properly embedded in the fish's mouth.

If the mechanism preventing reverse motion of the reel is switched on, the jerking motion of the rod is transferred to the hook via the line. However, if switching does not take place—and this happens even to the most experienced angler—the backwards movement of the rod causes the line to stretch and the elastic end of the fishing rod to bend which in turn cause the bale arm to rotate around the spool of the reel and the line to be wound off the spool. At the end of the backwards movement of the rod, there is no force pulling the line off the spool, however, the reel components (and in particular the bale arm) are still rotating as a consequence of their accumulated kinetic energy. The bale arm, as it rotates, carries with it a piece of line causing a tangle of line and the following problems:

— a considerable material loss arises, since the line is generally irrecoverable,
— re-assembly is wearisome and time-consuming,
— in all probability the fish will also be lost, since, due to the entangled line, the drive arm cannot be rotated either forwards or backwards.

If often happens that the line has to be paid out from the reel for the following reasons:

— the angler wants to step back with his rod but without pulling the hook, float and line backwards,
— the line running into the water has been overstretched and the angler wants to loosen it,
— the angler wants to increase the slack of the device indicating the taking of the bait.

It is possible to open the set brake in order to pull out the line from the spool, but resetting it is wearisome and time-consuming and furthermore re-setting is not always with the required accuracy.

It seems to be more convenient to allow for the paying out of a small amount of line by modifying the mechanism that prevents reverse motion so that it allows a limited amount of reverse motion for the purposes listed above but prevents large and sudden movements in the reverse direction. Thus, when an angler wants to pay out a small amount of line he does not have to switch off the mechanism preventing reverse motion with the consequent danger of forgetting to switch it back.

The aim of the invention is partly to eliminate the disadvantageous features of the known solution and partly to develop a mechanism for automatically preventing reverse motion in the reel when the moving parts of the reel have reached a critical combination of angular velocity and angular acceleration.

Accordingly, the present invention provides a fishing reel comprising a rotor for winding line onto and off the reel, a stator, a drum mounted on the stator and a body that is so mounted on the rotor that it moves towards the drum both under the influence of centrifugal force when the rotor rotates in the said one direction and also under the influence of a force arising from the inertia of the body when the rotor is accelerated in the said one direction, the reel further comprising a spring acting on the body to bias the body away from the drum, the arrangement being such that when the rotor is rotated in the said one direction with a critical combination of angular velocity and angular acceleration, the body engages the drum, characterised in that the said engagement is such that the body jams against the drum preventing further rotation in the said one direction.

In one embodiment, the body is pivotally mounted on the rotor, a stop pin is mounted on the rotor to limit the movement of the body under the bias of the spring and the body includes a friction lining for engagement with the drum, the lining being arranged in front of the pivot of the body when the rotor is turning in the said one direction, so that on engagement between the lining and the drum, the momentum of the rotor causes the lining to be urged further towards the drum, thereby jamming the body against the drum and preventing further movement of the rotor in the said direction.

Alternatively, the body may be held by the spring in a keyway in the rotor in which the body can move, one edge of the keyway being located behind the body when the rotor is turned in the said one direction and being angled to provide a tapering space between it and the drum, the arrangement being such that on engagement between the body and the drum when the rotor is rotated in the said one direction, the body is jammed in the tapering space between the drum and the said keyway edge thereby preventing the rotor from moving further in the said one direction.

There will now be described, by way of example only, four embodiments of the invention with reference to the accompanying drawings, in which:

Figure 1 is an axial cross-sectional view of a first embodiment;

Figure 2 is a transverse cross-sectional view of the first embodiment;

Figure 3 is a transverse cross-sectional view of the first embodiment;

Figure 4 is an axial cross-sectional view of a second embodiment;

Figure 5 is a transverse cross-sectional view of the second embodiment;

Figure 6 is an axial cross-sectional view of a third embodiment;

Figure 7 is a transverse cross-sectional view of the third embodiment;

Figure 8 is an axial cross-sectional view of a fourth embodiment, and

Figure 9 is a transverse cross-sectional view of the fourth embodiment.

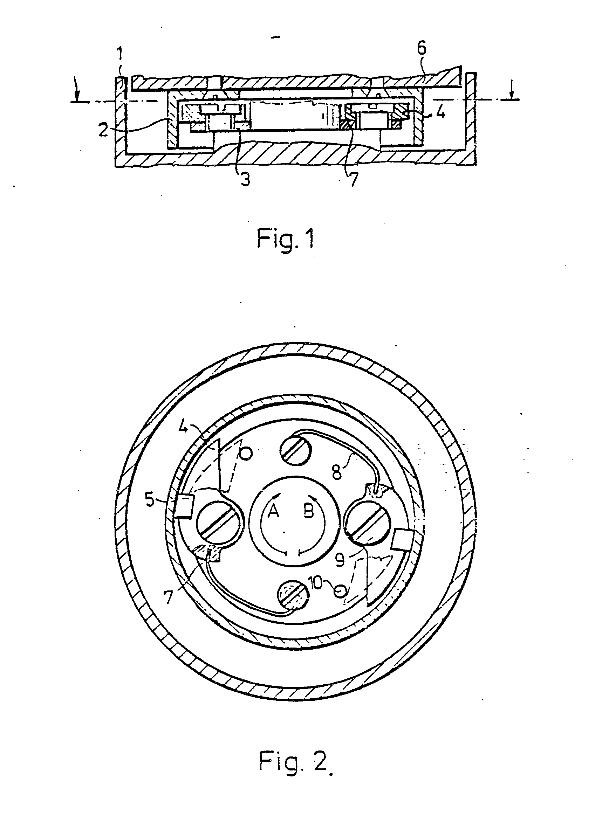

In Figures 1 and 2 sectional views of the fishing reel according to the invention are shown; the reel automatically inhibits motion in one direction A (hereafter referred to as the 'reverse motion') which is the direction in which the reel rotates when line is pulled off from the reel. This is achieved by two fly weights 4 each provided with a friction lining 5 and mounted on a pivot 3; when the reel is at a standstill, the fly weights 4 are kept in a position against detent pins 10 by means of fly weight springs 8. A stationary wall or drum 2 is fixed on the housing 6 of the reel, which is at all times stationary.

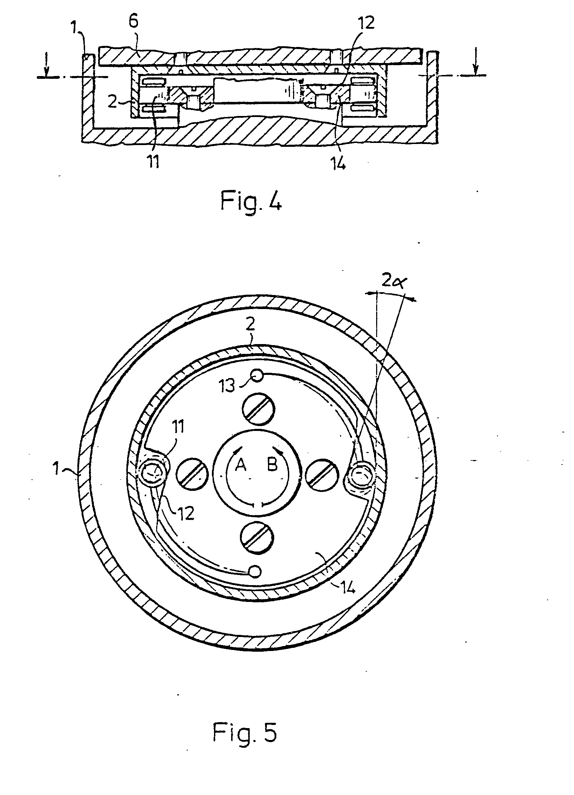

With the construction illustrated in Figures 4 and 5 which is more preferable since it has a longer useful life, instead of the fly weights 4, roller fly weights 11 are used, which are kept in respective keyways in a base plate 14 by fly weight springs 12. The positions of the springs and the rollers are indicated by a discontinuous line in the drawing.

The springs 12 are fixed on the base plate 14 by pins 13.

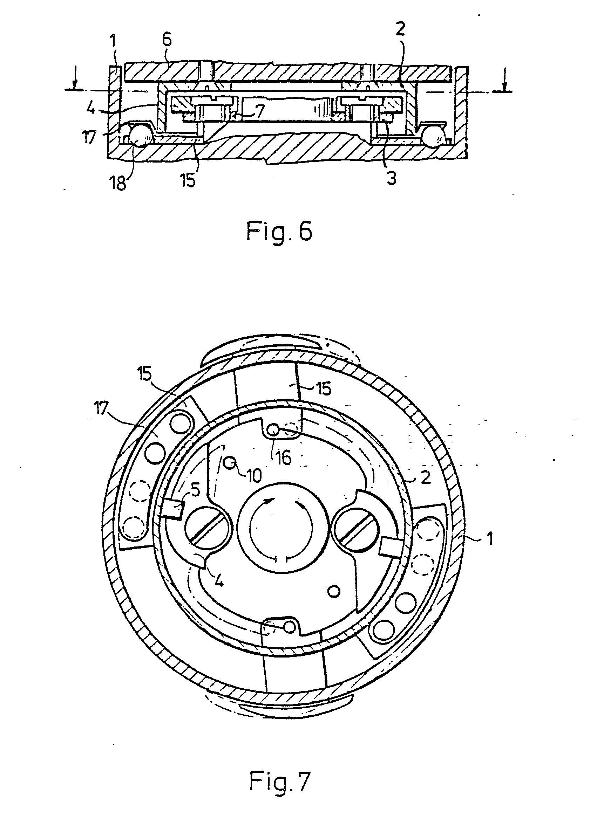

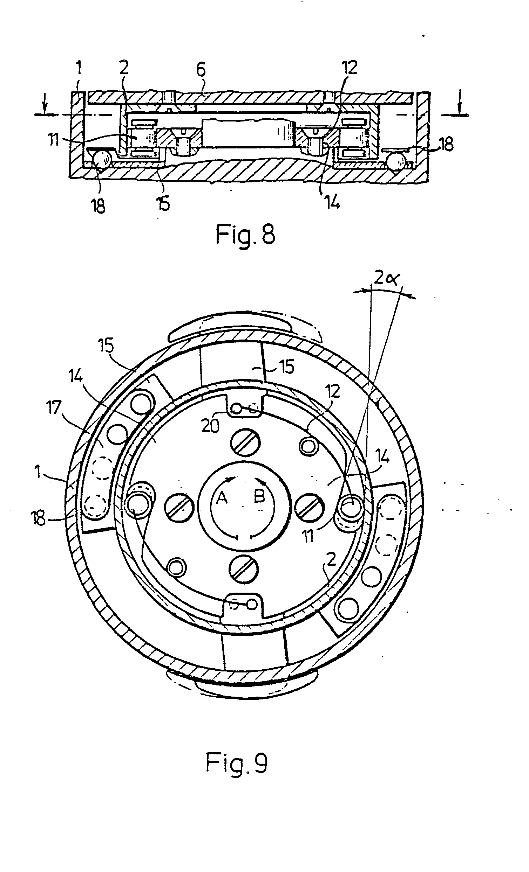

A further preferred embodiment—as a matter of fact a further developed form of the embodiments according to Figures 1, 2 and 4, 5—is shown in Figures 6 to 9; this version additionally has, as will be described later, a selector arm 15 for selecting the mode of operation between a first mode in which rotation in the clockwise direction (as seen in the drawings) is inhibited when rotation in that direction is completely prevented, i.e. the critical values of velocity and acceleration are zero. The two stable positions of the selector arm 15 are ensured by means of arrester springs 17 which act on ball 18 to bias them into one of two alternative nests. The arm 15 carries spring pins 16 and 20 respectively, which bias the fly weight springs 8, 12 to different extents, depending on the position of the selector arm 15.

The mechanism according to the invention operates as follows:

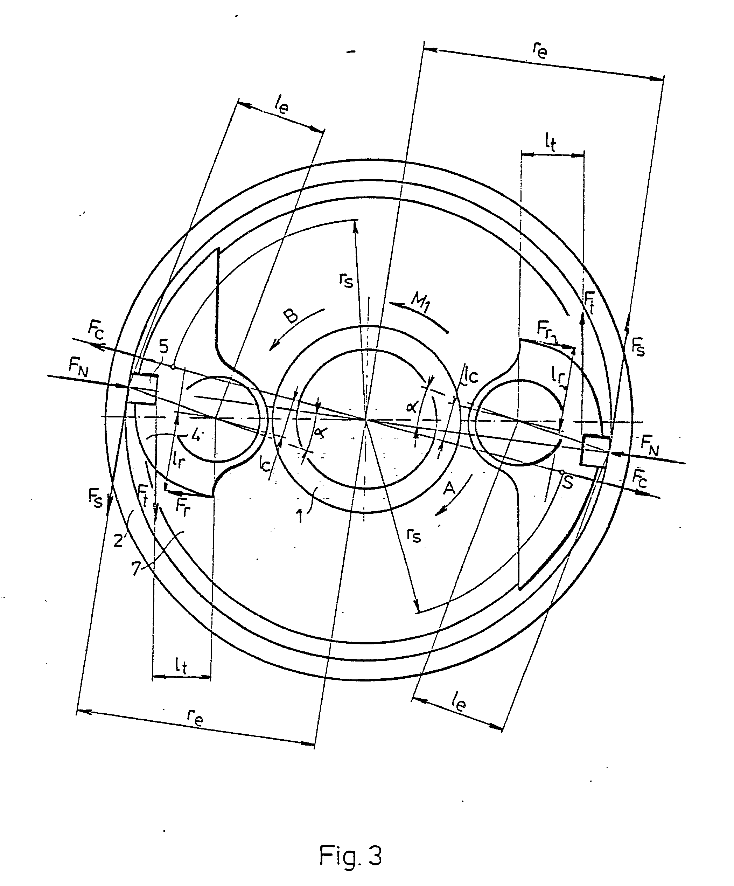

With the embodiment seen in Figures 1 and 2, when the rod is jerked back to embed the hook in the fish's mouth, the rotating part 1 rotates in reverse direction A, and the base plate 7 accelerates and quickly reaches the critical values of angular velocity and angular acceleration, e.g. before more than a total of 5 cm of line are wound out, at which point the automatic braking operation is actuated. The angular velocity of base plate 7 and of weights 4 causes a centrifugal force to act on the weights. Furthermore, as the base plate 7 is accelerated in direction A, the inertia of the weights causes a tangential force to act on the weights. This tangential force acts, in effect, on the centre of gravity of each weight and therefore tends to pivot the weights about pins 3 in an outward direction, i.e. towards the drum 2. The centrifugal and tangential forces acting on fly weights overcome the force of the spring 8 and consequently the fly weights 4 pivot about pins 3 so that the friction linings 5 approach the inner surface of the stationary drum 2. When the linings 5 contact the drum 2, if the angle α according to Figure 3 is properly chosen, the fly weights are wedged in between wall 2 and pins 3, thereby jamming the rotating components and bringing the spool to a standstill. If the spool is rotated in the anti-clockwise direction B, the jamming does not occur.

In an expedient manner, the mechanism according to the invention is so dimensioned that at very low acceleration.ε values, the critical value of angular velocity of the spool should be about 2—3 revolutions per sec; with values lying below that value fishing line can be wound out by means of the drive arm of the spool without activating the automatic jamming mechanism.

The embodiment shown in Figures 4 and 5 operates as follows:

The roller fly weights 11 are held by the fly weight springs 12 and under the influence of (a) increasing centrifugal forces arising from the rotation of the weights 11 and (b) tangential forces arising from the inertia of the weights 11 on acceleration of the weights as described above, the weights 11 move from the bottom of the keyway in the base plate 14 towards the drum 2, against the action of springs 12. If rotation is in the clockwise direction, the fly weights 11, on reaching the inner surface drum 2, are immediately jammed between the following inclined surface of the keyway and the drum 2. Rotation of the spool in the anti-clockwise direction does not give rise to such jamming since the corresponding surface of the keyway is inclined at about 90° to the adjacent surface of the drum 2.

In Figures 6 to 9, further preferred embodiments are shown in which the previously illustrated embodiment of Figures 1, 2, 4 and 5 are completed with a selector arm 15 for the selection of one of two modes of operation, by means of which rotation in the clockwise direction can be stopped either when the angular velocity and acceleration reach a critical value (the "automatic" mode) or instantly when the rotating part 1 starts to move in the clockwise direction (the "instant" mode). In both cases, the spring pins 16, 20 arranged on the selector arm 15 position the fly weight springs 8, 12 to maintain the fly weights 4 and 11 in a desired position with respect to drum 2. In the "automatic" mode of operation, the selector arm 15 keeps the distance between the fly weights 4, 11 and the drum 2 by means of the fly weight springs 8, 12; the fly weights can only reach the wall under the influence of sufficiently high centrifugal and tangential (inertia) forces corresponding to the critical velocity and acceleration values of rotating part 1. In the "instant" mode, the springs 8, 12 hold the fly weights against wall 2 so that they jam on the instant that clockwise rotation begins.

As is apparent, the reel of the present invention prevents tangling of the fishing line which means that it is not liable to damage, time-consuming re-assembly is avoided and last but not least, a fish once caught is not lost.

The construction has several other advantages, e.g. it has a very simple design and it operates noiselessly, in the course of winding in.

The forces and moments arising in the course of the operation of the mechanism for the automatic prevention of rotation in one direction, as well as their calculation and correlations will now be discussed with reference to Figure 3:

The rotating part 1 carrying the fly weights 4 and the base plate 7 can rotate in the direction 'B' without hindrance. However, if the driving moment $M_f$ causes rotation in the direction 'A' above a critical pair of values of angular velocity and acceleration $\omega-\varepsilon$, the fly weights—overcoming the spring forces—pivot.

In the instant before the contact between the friction lining 5 and the drum 2, the following moments are exerted on the fly weight 4:

$$M=F_c(\omega) \cdot l_c+F_t(\varepsilon)l_t-F_r \cdot l_r$$

The moment $M_f$ causing the acceleration of the rotating part 1 does not stop on contact between the friction linings 5 and the wall 2 but induce a force $F_N$, $F_N=f(M_f)$.

The moments exerting an influence on the fly weight 4 are:

$$F_r \cdot l_r+F_N(M_f) \cdot l_e \cdot \sin \alpha=F_N(M_f) \cdot l_e \cdot \cos \alpha$$

When $\alpha \leqslant \varphi=$ arc tg $\mu$, then the frictional connection becomes self-closing and geometrical dimensions should be chosen accordingly.

The corresponding requirement for the jamming of the Figures 4 and 5 embodiment is:

$$\alpha=\text{arc tg } \mu.$$

In the above calculations:
- $l_c$: the distance between the influence line of the centrifugal force and the fulcrum of the fly weight;
- $l_r$: the distance between the influence line of the spring force and the fulcrum of the fly weight;
- $l_e$: the distance between the point where the jamming force acts and the fulcrum of the fly weight;
- $r_e$: radius of braking;
- $r_s$: radius of the centre of gravity of the fly weight;
- $s$: centre of gravity of the fly weight;
- $F_c$: centrifugal force;
- $i_t$: the distance between the resultant of the tangential inertia forces and the fulcrum of the fly weight;
- $\varepsilon$: acceleration of the rotating part;
- $F_t$: the resultant of the tangential inertia forces;
- $F_s$: frictional force;
- $F_r$: spring force;
- $\alpha$: angle of connection;
- $\omega$: angular velocity of the rotating part;
- $\mu$: coefficient of friction;
- $m$: the mass of one fly weight;
- $M_f$: moment accelerating the rotating part.

**Claims**

1. A fishing reel comprising a rotor (7, 14) for winding line onto and off the reel, a stator (6), a drum (2) mounted on the stator (6) and a body (4, 11) that is so mounted on the rotor (7, 14) that it moves towards the drum (2) both under the influence of centrifugal force when the rotor (7, 14) rotates in one direction (A) and also under the influence of a force arising from the inertia of the body when the rotor (7, 14) is accelerated in the said one direction (A), the reel further comprising a spring (8, 12) acting on the body (4) to bias the body away from the drum (2), the arrangement being such that when the rotor is rotated in the said one direction (A) with a critical combination of angular velocity and angular acceleration, the body (4, 11) engages the drum (2), characterised in that the said engagement is such that the body (4, 11) jams against the drum (2) preventing further rotation in the said direction (A).

2. A fishing reel as claimed in claim 1, characterised in that the body (4) is pivotally mounted on the rotor (7), a stop pin (10) is mounted on the rotor (7) to limit the movement of the body (4) under the bias of the spring (8) and the body (4) includes a friction lining (5) for engagement with the drum (2), the lining being arranged in front of the pivot of the body (4) when the rotor (7) is turning in the said one direction (A), so that on engagement between the lining (5) and the drum (2) the momentum of the rotor causes the lining (5) to be urged further towards the drum (2), thereby jamming the body (4) against the drum (2) and preventing further movement of the rotor (7) in the said one direction (A).

3. A fishing reel as claimed in claim 1, characterised in that the body (11) is held by the spring (12) in a keyway in the rotor (14) in which the body (11) can move, one edge of the keyway being located behind the body (11) when the rotor (14) is turned in the said one direction (A) and being angled to provide a tapering space between it and the drum (2), the arrangement being such that, on engagement between the body (11) and the drum (2), when the rotor is rotated in the said one direction (A), the body (11) is jammed in the tapering space between the drum (2) and the said keyway edge thereby preventing the rotor (14) from moving further in the said one direction (A).

4. A fishing reel as claimed in any one of claims 1 to 3, characterised in that the reel further includes a selector arm (15) capable of moving between two stable positions to change the position and/or tension in the spring (8, 12) thereby also changing the critical combination of angular velocity and angular acceleration at which jamming occurs.

**Patentansprüche**

1. Angelwinde mit einem Rotor (7, 14) zum Auf- und Abwickeln der Angelschnur, einem Stator (6) und einer an diesem befestigten Trommel (2) sowie einem derart an dem Rotor (7, 14) angeordneten Körper (4, 11), daß er sich sowohl unter Einfluß der Zentrifugalkraft bei Umlauf des Rotors (7, 14) in der Richtung A, als auch unter dem Einfluß einer sich bei Beschleunigung des Rotors (7, 14) in Richtung A aus der Trägheit des Körpers ergebenden Kraft in Richtung der Trommel (2) bewegt, wobei die Winde außerdem eine auf den Körper (4) einwirkende Feder (8, 12) aufweist, die den Körper von der Trommel 2 weg beeinflußt, so daß bei Umlauf des Rotors in Richtung A unter einer kritischen Kombination der Winkelgeschwindigkeit und der Winkelbeschleunigung der Körper (4, 11) an der Trommel (2) angreift, dadurch gekennzeichnet, daß durch diese Anordnung der Körper (4, 11) sich gegen die Trommel (2) verklemmt und dadurch eine weitere Rotation in der Richtung A verhindert.

2. Angelwinde nach Anspruch 1, dadurch gekennzeichnet, daß der Körper (4) drehbar an dem Rotor (7) und an diesem ein Anschlagzapfen (10) zur Begrenzung der Bewegung des Körpers (4) unter der Beeinflussung durch die Feder (8) angeordnet ist und daß der Körper (4) einen Reibungsbelag (5) zum Eingriff gegenüber der Trommel (2) aufweist, der sich bei in Richtung A umlaufendem Rotor (7) an der Vorderseite der Drehachse des Körpers (4) befindet, so daß bei einem Eingriff zwischen dem Belag (5) und der Trommel (2) der Belag (5) durch das Drehmoment des Rotors (7) derart zusätzlich gegen die Trommel (2) gepreßt wird, daß der Körper (4) gegen die Trommel (2) verklemmet und eine weitere Bewegung des Rotors (7) in Richtung A verhindert.

3. Angelwinde nach Anspruch 1, dadurch gekennzeichnet, daß der Körper (11) durch die Feder (12) in einer Führungsnut des Rotors (14) gehalten ist, in der der Körper (11) beweglich ist, daß ein Ende der Führungsnut bei in Richtung A umlaufendem Rotor (14) sich hinter dem Körper (11) befindet und angewinkelt ist unter Bildung eines spitz zulaufenden Zwischenraums zwischen Nut und Trommel (2), wobei die Anordnung so getroffen ist, daß bei Eingriff des Körpers (11) gegenüber der Trommel (2) und in Richtung A umlaufendem Rotor (14) der Körper (11) in den spitz zulaufenden Zwischenraum zwischen Trommel (2) und dem Nutende verklemmt und dadurch eine weitere Bewegung des Rotors (14) in Richtung A verhindert.

4. Angelwinde nach einem der Ansprüche 1 bis 3, dadurch gekennzeichnet, daß sie einen Wählhebel (15) aufweist, der zum Verändern der Stellung und/oder Spannung der Feder (8, 12) zwischen zwei Endstellungen bewegbar ist und dadurch die kritische Kombination der Winkelgeschwindigkeit und Winkelbeschleunigung, bei welcher das Verklemmen eintritt, variiert.

**Revendications**

1. Moulinet de pêche comportant un rotor (7, 14) pour bobiner la ligne sur le moulinet et l'en débobiner, un stator (6), un tambour (2) monté sur le stator (6) et un corps (4, 11) monté sur le rotor (7, 14) de façon telle qu'il se déplace en direction du tambour (2) à la fois sous l'influence de la force centrifuge lorsque l'on fait tourner le rotor (7, 14) dans un sens (A) et également sous l'influence d'une force provenant de l'inertie du corps lorsque le rotor (7, 14) est accéléré dans ledit sens (A), le moulinet comportant en outre un ressort (8, 12) qui agit sur le corps (4) pour solliciter le corps dans une direction tendant à l'éloigner du tambour (2), la disposition étant telle que lorsqu'on fait tourner le rotor dans ledit sens (A) avec une combinaison critique de la vitesse angulaire et de l'accélération angulaire, le corps (4, 11) vient au contact du tambour (2), caractérisé en ce que ledit contact est tel que le corps (4, 11) se coince contre le tambour (2) en évitant ainsi la poursuite de la rotation dans ledit sens A.

2. Moulinet de pêche comme revendiqué dans la revendication 1, caractérisé en ce que le corps (4) est monté, avec possibilité de pivotement, sur le rotor (7); en ce qu'une goupille d'arrêt (10) est montée sur le rotor (7) pour limiter le mouvement du corps (4) sous l'influence du ressort (8); et en ce que le corps (4) comporte une garniture de friction (5) pour venir au contact du tambour (2), la garniture étant disposée en avant du pivot du corps (4) lorsque le rotor (7) tourne dans ledit sens (A) de sorte que, lors du contact entre la garniture (5) et le tambour (2), l'impulsion du rotor fait que la garniture (5) continue à être poussée en direction du tambour (2), coinçant ainsi le corps (4) contre le tambour (2) et empêchant la poursuite du mouvement du rotor (7) dans ledit sens A.

3. Moulinet de pêche comme revendiqué dans la revendication 1, caractérisé en ce que le corps (11) est maintenu par le ressort (12) dans une encoche du rotor (14) dans laquelle le corps (11) peut se déplacer, un bord de l'encoche étant situé derrière le corps (11) lorsque le rotor (14) est amené à tourner dans ledit sens (A) et formant un angle pour définir un espace en coin entre lui et le tambour (2), la disposition étant telle que, lors du contact entre le corps (11) et le tambour (2), lorsque l'on fait tourner le rotor dans ledit sens (A), le corps (11) est coincé dans l'espace en coin entre le tambour (2) et ledit bord de l'encoche empêchant ainsi le rotor (14) de continuer à se déplacer dans ledit sens (A).

4. Moulinet de pêche comme revendiqué dans l'une quelconque des revendications 1 à 3, caractérisé en ce que le moulinet comporte en outre un bras sélecteur (15) que l'on peut déplacer entre deux positions stables pour changer la position et/ou la tension dans le ressort (8, 12), pour ainsi également changer la combinaison critique de la vitesse angulaire et de l'accélération angulaire pour laquelle se produit le coincement.

Fig. 1

Fig. 2.

Fig. 3

Fig. 4

Fig. 5

Fig. 6

Fig. 7

Fig. 8

Fig. 9